# EUROPEAN PATENT SPECIFICATION

(11) **EP 2 786 051 B1**
(45) Date of publication and mention of the grant of the patent: **14.03.2018**
(21) Application number: 12813503.5
(22) Date of filing: 30.11.2012
(51) Int. Cl.: F16K 15/03, F16K 15/18, F16K 27/02, F16K 31/528

(54) **QUICK MAINTENANCE UNDERSEA CHECK VALVE**
UNTERSEEISCHES RÜCKSCHLAGVENTIL MIT SCHNELLER WARTUNG
SOUPAPE ANTI-RETOUR SOUS-MARINE À MAINTENANCE RAPIDE

(30) Priority: 02.12.2011 IT VI20110312
(43) Date of publication of application: 08.10.2014
(73) Proprietor: Pentair Flow Control AG, 8200 Schaffhausen (CH)
(72) Inventor: MANZETTI, Bruno, 29018 Lugagnano Val d'Arda (PC) (IT); PETRUZZA, Enzo, 29018 Lugagnano Val d'Arda (PC) (IT)
(74) Representative: Johnson, Carrie-Anne Louise
(86) International application number: PCT/IB2012/056873
(87) International publication number: WO 2013/080179

(56) References cited:
- GB-A- 2 161 903
- US-A- 3 119 594
- US-A- 4 669 500
- US-A- 5 010 919

## Description

### TECHNICAL FIELD OF THE INVENTION

The present invention relates to the technical field of valves. In particular, the present invention relates to a check valve. More specifically, the present invention relates to a check valve particularly suited for undersea use, i.e. suited to be used in an undersea pipeline.

### STATE OF THE ART

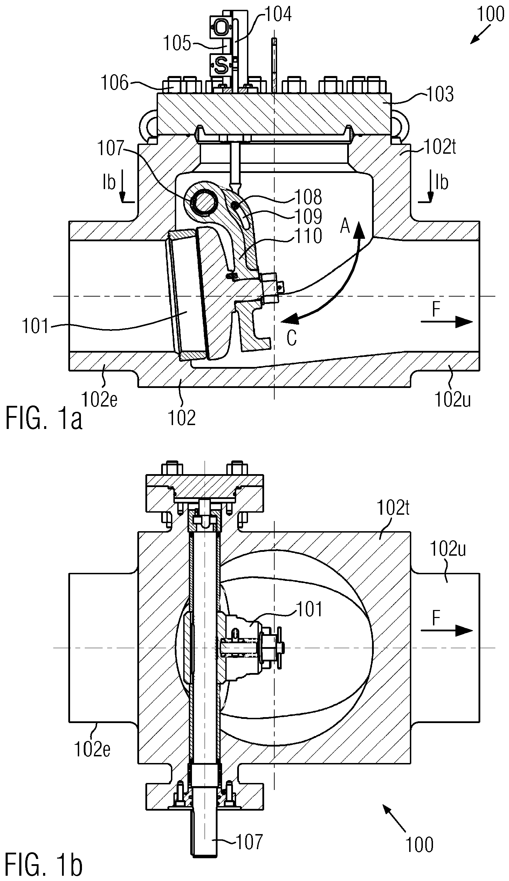

Check valves are valves enabling flow in one direction only, see for example US 3,119,594 A1, US 4,669,500 A1, US 5,010,919 A1 or GB 2161903 A. Valves of this type are used, for example, for systems of pipelines wherein the backflow of the fluid is preferentially avoided, for example, for undersea systems. An example of a check valve known in the state of the art and of the type used for undersea pipelines is shown in Figures 1 a and 1b.

In valve 100 shown in Figures 1 a and 1b, closing and opening of the valve are driven by the flow of the fluid flowing through the inner cavity defined by the main body 102 of the valve. In particular, when the fluid flows in the direction indicated by arrow F in the figure, the fluid enters the valve (more specifically, the inner cavity) through the entrance end 102e of the valve and hits the closing element 101 of the valve, which is then caused to rotate by the fluid in the opening direction of rotation A. The fluid can then exit valve 100 through the exit opening 102u. When the flow of the fluid in the direction indicated by arrow F stops or decreases, the sealing or closing element 101 rotates by gravity in the rotation direction C until it reaches once again the closing position shown in Figures 1 a and 1b. The same occurs when the fluid flows in a direction opposite that of arrow F, i.e. in the case in which the fluid enters valve 100 through exit opening 102u. In this case, the fluid hits closing element 101 thus exerting a pressure thereupon so as to push closing element 101 toward the closing position and keep it in that position. In this manner, the fluid is prevented from flowing back through the valve in a direction opposite to that indicated by arrow F. Clearly, the position of closing element 101 will, in general, depend on the instantaneous flow of the fluid, with closing element 101 being adapted to take any intermediate position between the closing position shown in Figures 1 a and 1b and a totally open position. Other aspects of operation of the valve 100 shown in Figures 1 a and 1b relate, for example, to the fact that the weight of closing element 101 defines the minimum flow required for moving closing element 101 from its closing position and, thus, for achieving valve opening and passage of the fluid. Fluxes less than the threshold minimum flux do not cause the valve to open. From what has been set forth above, as well as from Figures 1 a and 1b, it is understood that the closing element is rotatably fixed to a rotation shaft 107 by means of a fixing element 110, a portion of rotation shaft 107 being in particular housed in a housing or seat formed in fixing element 110. Closing element 101 is thus free to rotate about rotation shaft 107. In particular, closing element 101 is free to rotate about rotation shaft 107 in the rotation direction A (counter-clockwise in Figure 1a) thanks to the thrust exerted by the fluid in the direction of arrow F. Closing element 101 is then free to rotate about rotation shaft 107 in rotation direction C (clockwise in Figure 1A) thanks to the weight of closing element 101 and/or to the thrust exerted by the fluid in case of flux in the direction opposite to that shown by arrow F. Furthermore, closing element 101 may also be caused to rotate (in both directions of rotation A and C) mechanically, in particular, by means of a reducer (not shown in the figures) acting upon one end of rotation shaft 107. Rotation of rotation shaft 107 by means of the reducer and, thus, opening and closing of valve 100 are carried out, for example, in the case in which the inside of valve 107 is to be inspected or cleaned, operations which may be performed either manually or mechanically.

Finally, valve 100 is provided with an indicator of valve opening degree and, thus, of the instantaneous position of closing element 101. Said indicator comprises, in particular, a reference 105 and an indication arm 104 linearly translatable with respect to reference 105 and provided with an indication notch at one end. The position of the notch with respect to the two extreme references "O" (open) and "S" (shut) will indicate the opening degree of the valve. In correspondence to the end opposite to the end upon which the indication notch is formed, arm 104 comprises a fixing stud or pin 108 which is received in a fixing slot 109 formed by fixing element 110. Rotation of closing element 101 and, thus, of fixing element 110 will then result in a translation of arm 104. In particular, in case of rotation of closing element 101 in the direction of arrow A, arm 104 will be translated upward with respect to Figure 1 a (towards reference "O"), whereas in case of rotation of closing element 101 in the direction of arrow C, arm 104 will be translated downward with respect to Figure 1a, and thus towards reference "S".

One major problem with valves of the type described above and shown in Figures 1 a and 1b relates to the difficulties found during maintenance operations. In this respect, it should be appreciated that maintenance operations, in case of undersea use of the valve, are obviously particularly difficult and cumbersome as such due to the particular conditions in which an operator is to operate. Usually, in case of depth of the valve down to 500 meters, maintenance operations are carried out by deep-sea divers, whereas at greater depths remote-controlled means are required such as, for example, undersea robots.

In particular, when maintenance and/or fixing of valve 100 shown in Figures 1 a and 1b and/or of constituent parts thereof are required, for example, in case of closing element 101 blocked in a particular position (for example closed, open or intermediate positions) due to deposit or debris within the valve, a deep-sea diver will have to remove the cover 103 (arranged so as to close tower portion 102t which extends from the main body 102 of valve 100) by freeing (unscrewing) nuts or bolts 106. However, at this point, if the damage or failure of closing element 101 has to be repaired on the surface (for example, in a workshop), closing element 101 will also have to be removed and brought up to the surface. Removing the closing element, however, requires rotation shaft 107 to be decoupled from the actuating reducer and removed from its housing seat (formed in tower portion 102t of the valve). Finally, fixing element 110 is to be taken out of rotation shaft 107. It should also be noticed that parts of the valve which have to be disassembled have to be sent up to the surface, since they may not be stored, even if only on a temporary basis, on the bottom of the sea.

It is also clear that all pieces or constituent parts previously disassembled, removed and sent up to the surface as described above, will subsequently have to be returned to the previous site and mounted back into the valve, one at a time and through single operations which have to be carried out sequentially. From what has just been set forth and clarified, one can understand that valves of known types (for example, of the type shown in Figures 1 a and 1b) cause times required for assembly and/or disassembly, mounting and/or removing as well as maintenance to remarkably increase, thus undesirably causing related costs to increase. In this respect, it should finally be appreciated that the maximum allowable time that a deep-sea diver can remain under water is inversely proportional to the depth at which he operates. Therefore, maintenance operations extending in time require more deep-sea divers, with a further increase of total maintenance time and, thus, with a further increase of related costs.

In view of the considerations previously set forth it is thus a goal of the present invention to propose a solution which enables overcoming or at least minimizing the problems with the valves known in the state of the art. In particular, a goal of the present invention is to propose a solution which enables simplifying assembly and/or maintenance operation of a valve, in particular, of a check valve adapted to undersea use, thus reducing the total assembly and/or maintenance total times and limiting related costs.

### BRIEF DESCRIPTION OF THE PRESENT INVENTION

The present invention is based on the general consideration according to which the problems with valves, in particular with check valves, of known type can be overcome or at least significantly minimized by providing a valve wherein the constituent parts thereof are reciprocally arranged in a convenient manner, in particular, wherein as great a number as possible of constituent parts thereof are reciprocally fixed to each other. One further consideration upon which the present invention is based relates to the fact that further remarkable and considerable advantages in terms of limited maintenance times and costs can be achieved by providing a valve wherein the closing element and cover thereof are fixed to one another.

Therefore, the present invention has as its object a valve as claimed in main claim 1. A valve, in particular a check valve, is adapted to regulate the flow of a fluid, said valve comprising a main body which defines an internal flow cavity adapted to allow said fluid to flow through its inside, said valve further comprising a closing element of said cavity, which can be moved between a first closing position and a second opening position of said cavity, said valve further comprising a cover adapted to be alternatively fixed to and removed from said main body so as to alternately close and open an aperture of said main body through which said cavity is into communication with the outside of said valve, said closing element being fixed to said cover. In this manner, by removing said cover from said main body, said closing element is simultaneously removed too, so that at least the cover and the closing element can be simultaneously sent up to the surface and simultaneously mounted back into the valve.

Further embodiments of the valve according to the present invention are defined and specified in the dependent claims.

### BRIEF DESCRIPTION OF THE FIGURES

In the following the present invention will be clarified by means of a detailed description of its embodiments shown in the attached drawings. In particular, in the figures:
Figures 1 a and 1b show a longitudinal section and a cross-section from above of the check valve of the type known in the state of the art, respectively;
Figures 2a, 2b and 2c show a cross-section, a longitudinal section and an exploded view of the check valve according to a first embodiment of the present invention, respectively;
Figures 3a, 3b and 3c show a perspective view and two longitudinal sections of a valve according to an embodiment of the present invention, respectively;
Figures 4a and 4b show a partial section view and a top view of the valve according to a further embodiment of the present invention, respectively.

### DETAILED DESCRIPTION OF THE INVENTION

In the following, the present invention will be clarified and explained by means of a detailed description of the embodiments of the present invention shown in the attached drawings. However, it should be pointed out that the present invention is not limited to the embodiments shown in the attached drawings and described in the following, but, rather, that the scope of the present invention includes all equivalent embodiments and is thus defined by the claims.

The present invention can be applied in a particularly advantageous manner to the field of check valves. This is the reason why the embodiments of the present invention shown in the attached drawings and described in detail in the following are related to check valves. However, the present invention is not limited to check valves but may also be applied to valves of other types in as advantageous a manner as before. In particular, the present invention may be applied to all valves wherein the closing element can rotate about a rotation shaft or axis.

In Figures from 2a to 2c, as well as from 3a to 3c, equivalent or similar constituent parts of the valve according to the embodiments shown in the figures are identified by the same reference numerals.

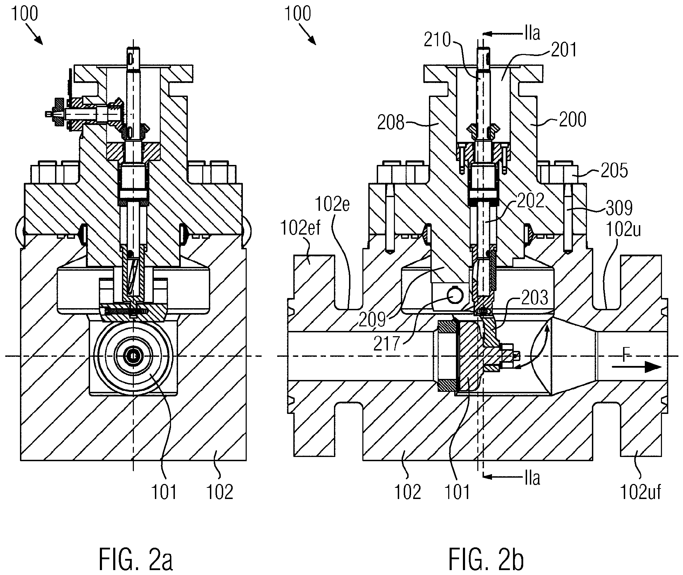

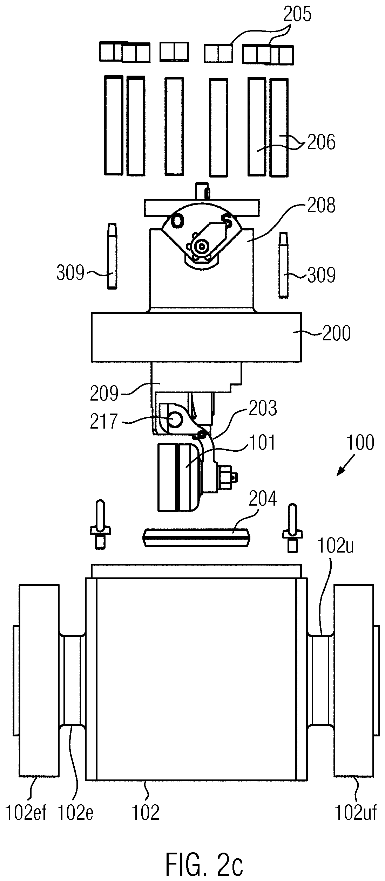

In Figures from 2a to 2c, the valve according to the embodiment of the present invention represented therein is identified by reference numeral 100. Valve 100 comprises a main body 102 defining an internal cavity for passage of a fluid. Within said cavity a closing element 101 is positioned which can be moved between a closing position (shown in Figure 2b) and an opening position (not shown in Figures from 2a to 2c). In particular, closing element 101 is rotatable with respect to a rotating pin or rotating shaft 217 in the two rotation directions indicated by arrows in Figure 2b (counter-clockwise and clockwise with respect to Figure 2b) so as to alternatively close and open the cavity for passage of the fluid. As in the case of valves of known type, the rotation of the closing element in the two directions and, thus, closing and opening of the cavity for passage of the fluid by means of same closing element, are driven both in an automatic manner by the fluid flow and mechanically by means of an activation device (described in more detail in the following) of closing element 101. That is to say that a fluid flow in the direction of arrow F will cause closing element 101 to rotate in a counter-clockwise direction with respect to Figure 2b, thereby opening the valve. On the other hand, in the absence of flow or in the presence of a flow in the opposite direction to arrow F, the closing element will rotate in a clockwise direction by gravity or due to the thrust exerted thereupon by said opposite flow, respectively. The activation device, among other things, allows closing element 101 to be moved (i.e. to rotate in the two rotation directions) independently of the flow every time this is required (for example, when the fluid flow is absent and the valve is to be opened so as to inspect or maintain it).

Main body 102 thus comprises an entrance end 102e for entrance of the fluid and an exit end 102u. In particular, entrance end 102e comprises a flanged portion 102ef. Analogously, exit end 102u comprises a flanged portion 102uf. Said flanged portions 102ef and 102uf are provided for facilitating coupling of the valve with a pipeline or a pipe. In particular, flanged portion 102ef enables coupling of valve 100 with the portion of said pipeline upstream from the valve, whereas flanged portion 102uf enables coupling of the valve with the portion of said pipeline downstream therefrom.

Clearly, in order to allow the valve to be connected to the portions of the pipeline upstream and downstream from the valve, different solutions may be chosen among those known to the person skilled in the art, alternative to flanged portions 102ef and 102uf described above. As a non-limiting example, end portions 102e and 102u may be of the type adapted to be connected by means of soldering.

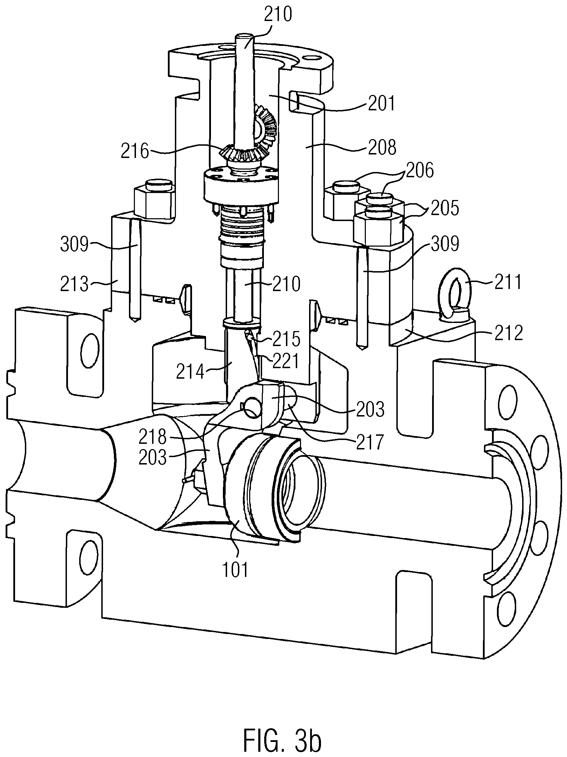

Valve 100 further comprises a cover 200 arranged so as to close an opening of the valve (facing upwards in Figure 2b) through which the internal cavity for passage of the fluid comes into communication with the outside. In particular, cover 200 is fixed to main body 102 by means of fixing means 205 and 206 (described in more detail in the following). The same cover further comprises a tower portion or turret 208 which extends from the flanged portion 213 (see in particular Figure 3b) of same cover 200, said flanged portion 213 being adapted to abut on a corresponding flanged portion 212 (Figure 3b) of main body 102, with a substantially annular gasket or sealing element 204 being interposed between the flanged portion 213 (Figure 3b) of cover 200 and the flanged portion 212 of main body 102 of valve 100. The fixing means previously mentioned and used for fixing cover 200 to main body 102 comprise in particular a plurality of tie rods 206 (substantially, pins with an outer thread). The lower end (facing main body 102) of each of said tie rods engages by screwing in the corresponding thread of an engagement hole formed in the flanged portion of main body 102. Furthermore, each one of tie rods 206 is partially received in a corresponding through hole formed in the flanged portion of cover 200, so that the end of each tie rod 206 (opposite the end of the same tie rod which engages in main body 102) protrudes from the upper surface of the flanged portion of cover 200 opposite the surface of the same flanged portion abutting onto the flanged portion of body 102 of valve 100. Fixing cover 200 to main body 102 is thus achieved by engaging on the end of each tie rod 206 which protrudes from the flanged portion of cover 200 a corresponding nut 205 provided with an inner thread and, thus, screwing said nut 205 onto the protruding end of the corresponding tie rod 206. Cover 200 can then be removed by unscrewing nuts 205 from respective tie rods 206. In order to facilitate mounting of cover 200 onto main body 102, and in particular in order to facilitate aligning of tie rods 206 (previously engaged and screwed onto main body 102) with the corresponding through holes of the cover, a plurality of alignment pins 309 are used, which protrude from main body 102 and are inserted into corresponding seats provided in cover 200 while aligning the cover.

Finally, it should be appreciated that closing element 101 is rotatably fixed to a rotating shaft or pin 217 by means of a fixing portion 203 which extends from closing element 101.

An extremely important feature of valve 100 according to the embodiment of the present invention shown in Figures from 2a to 2c relates to the fact that as opposed to the valves of known type (for example, the valve known in the state of the art and shown in Figures from 1a to 1b), rotating shaft or pin 217 is not fixed to the main body 102 of valve 100. In the case of the valve according to the embodiment of the present invention shown in Figures from 2a to 2c, the rotating shaft or pin 217 is fixed to a protruding portion 209 of cover 200 and in particular extending from cover 200 towards the inside of valve 100 (downwards in Figure 2b and thus towards the cavity for passage of the fluid) when the cover 200 rests on main body 102 of valve 100 in its assembled position. In particular, said protruding portion comprises an end portion, free and opposite cover 200, from which said rotating shaft or pin 217 protrudes transversely. Therefore, although further details of the present invention will be clarified by the following description, it can be understood from what has been said above that, if fixing and/or maintenance operations of the vale and/or of closing element 101 are required to be carried out on the surface, cover 200 can be removed by detaching cover 200 from main body 102 as described above, and, thus, unscrewing nuts 205 from corresponding tie rods 206. Furthermore, removing cover 200 will result in simultaneously removing closing element 101 (as well as fixing element 203 and rotating pin 217), since said closing element 101 is fixed to protruding portion 209 of cover 102 through fixing element 203 and rotating shaft or pin 217. Therefore, in case maintenance and/or fixing operations of closing element 101 are required (for example, maintenance and/or fixing operations to be carried out on the surface in case of undersea use of the valve), it will no longer be necessary, as is the case for the valves of known type, to remove the cover and the parts to be maintained and/or repaired, neither will it be necessary to send said constituent parts to the surface through distinct and separate operations. Conversely, in the case of the valve according to the present invention, by simply freeing and removing cover 200 from the main body, those parts of the valve which are attached to the cover, and thus in particular its closing element 101, will be simultaneously removed. These parts of the valve can then be sent up to the surface along with the cover as a single block or set of constituent parts. In the same way, mounting into the valve 100 those constituent parts which are attached to cover 200 and thus in particular closing element 101, can be carried out by means of a single operation, that is to say by mounting cover 200 onto main body 102 of valve 100.

A further extremely important feature of valve 100 according to the embodiment of the present invention shown in Figures from 2a to 2c relates to the fact that the activation device of closing element 101 (described in more detail in the following), which is the device which allows said closing element 101 to rotate in the two directions of rotation independently of the fluid flow, is at least partially received in a seat 201 formed in cover 200, in particular in the tower portion or turret 208 of cover 200. Thus, the activation device is also one of those constituent parts of valve 100 which can be alternatively removed or detached and installed or mounted by removing cover 200 from main body 102 and fixing said cover 200 to said main body 102, respectively. This feature also allows for simplified and accelerated maintenance and/or fixing and/or assembly or disassembly operations, since, for example, the activation device can be sent up to the surface (in case of undersea use of valve 100) along with and thus simultaneously with the cover. The activation device can then be stored and/or fixed on the surface with evident advantages in terms of reduced times and limited costs.

In the following, further features and/or constituent parts of the valve according to the present invention will be described and/or further clarified with reference to Figures from 3a to 3c, wherein constituent parts and/or features of the valve already described above with reference to other figures are identified by the same reference numerals.

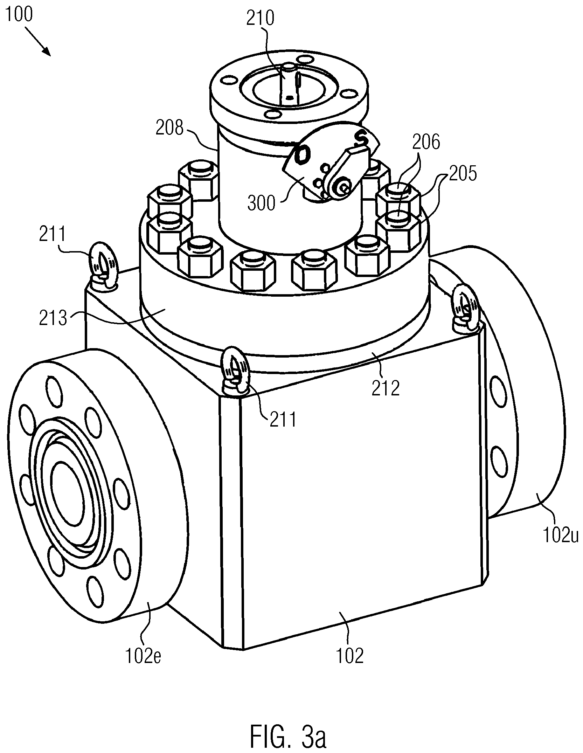

Figure 3a offers an overall perspective view of valve 100 from which one can appreciate the particular shape of cover 200 which comprises a flanged portion 213 (arranged so as to abut on a flanged portion 212 of main body 102) and a tower portion 208 which extends from said flanged portion 213. Outside the tower portion 208 of cover 200, an indicator 300 is arranged. Indicator 300 comprises a plate attached to tower portion 208 and a hand rotatable with respect to said plate in the two rotation directions, clockwise and counter-clockwise, between a first end "O" (open) corresponding to the position of full opening of the valve (of the closing element 101) and a second end "S" (shut) corresponding to the closing position of the valve (in particular, of closing element 101). Although the operations of opening indicator 300 will be described in the following, it can be understood from Figure 3a that rings or eyebolts 211 are fixed (screwed) onto main body 102 of valve 100 so as to facilitate moving valve 100. Said rings (of variable number and arranged at will according to the needs and/or circumstances) are adapted to be engaged, for example, by hooks arranged at ends of corresponding cables or ropes.

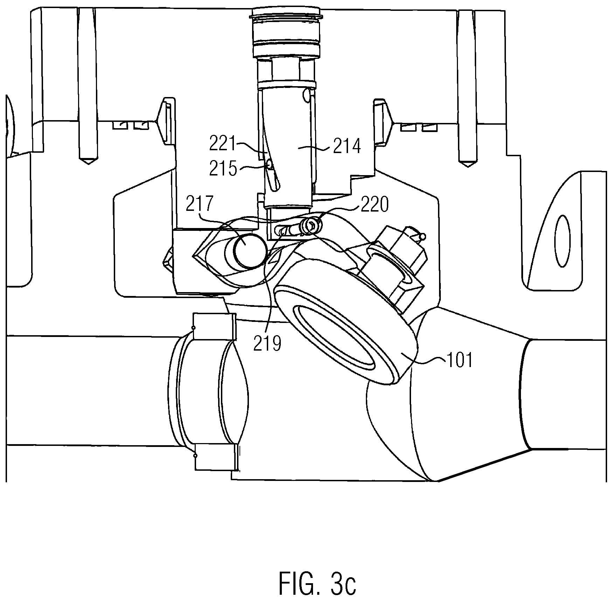

With particular reference to Figures 3b and 3c, it can be appreciated that the activation device previously mentioned comprises a rotating shaft or pin 210 housed in a seat 201 of cover 200 (in particular of its tower portion 208). Said rotating pin or shaft 210 is adapted to be rotated (in the two directions of rotation) by means, for example, of a reducer (not shown in the figures) which engages with the free end of pin 210 which protrudes from tower portion 208 of main body 102. On the end of rotating shaft 210 opposite its free end (and, thus, housed inside valve 100), a hollow or empty body 214 is arranged. Said empty body 214 is adapted to be translated along said free end of rotating shaft 210. It should be noted that the position of the empty body with respect to rotating shaft 210 shown in Figure 3b (with closing element 101 in closing position) differs from that shown in Figure 3c (with closing element 101 in opening position), since empty body 214 shown in Figure 3b is shifted downward with respect to Figure 3c. In the cylindrical side wall of empty body 214 a helicoidal groove 221 is formed which receives a pin 215 protruding from rotating shaft 210 in a direction substantially perpendicular to the rotating shaft. Furthermore, from the end of empty body 214 opposite rotating shaft 210, a second fixing pin 220 protrudes, which is received in a seat 219 formed in fixing element 203. Furthermore, fixing element 203 comprises an end wherein a housing seat 218 is formed in which a portion of rotating pin 217 is housed. Rotating pin 217 is in turn fixed to portion 209 which protrudes from cover 200 toward the inside of valve 100 as previously explained. A second end of fixing element 203 is firmly fixed to closing element 101. Finally, seat 219 is formed in a position between the two end portions of fixing element 203. Moving operations of closing element 101, and in particular its rotation in the two directions of rotation, by means of the activation device may be summarized as follows.

In case rotating shaft 210 rotates in a counter-clockwise direction (according to a top view of valve 100), said rotation will result in empty body 214 being translated upward (towards the outside of valve 100) thanks to pin 215 being received in helicoidal groove 221. Empty body 214 will then drag fixing element 203 along with it, so that closing element 101 will be rotated in the opening direction. Conversely, if rotating shaft 210 rotates in a clockwise direction (still according to a top view of valve 100), said rotation will result in empty body 214 being translated downward (towards the inside of valve 100), once again thanks to pin 215 being received in helicoidal groove 221. Empty body 214 will thus drag fixing element 203 along with it so that closing element 101 will be rotated in the closing direction.

Finally, rotating shaft 210, during its rotation in the two directions clockwise and counter-clockwise, causes the rotation of the constituent parts (gear wheels) of a transmission mechanism or differential 216 connected to the hand of the opening indicator 300 previously described. In particular, the first gear wheel fixed rotating shaft 210 causes a second gear wheel to rotate which is arranged perpendicularly to said first gear wheel. The second gear wheel is connected to the hand of the indicator by means of a connecting pin passing through the outer wall of tower portion 208 of cover 200. The hand of the indicator is thus rotated between the two positions "O" and "S" previously mentioned.

By means of the present invention it has thus been proved that the valve according to the present invention allows the problems with valves of the same type known from the state of the art to be overcome or at least minimized. In particular, the valve according to the present invention allows for considerably simplified assembly and/or disassembly as well as maintenance operations of the main constituent parts of the valve, thus reducing and limiting related times and costs. Indeed, since the closing element of the valve according to the present invention is fixed to the cover of the valve instead of to its main body, through the same operation of removing the cover from the main body of the valve, at least the closing element and the rotating pin with respect to which said closing element is free to rotate will be simultaneously removed and detached from the main body of the valve. In the same way, through the same operation of fixing the cover to the main body of the valve, the closing element and the relative rotating pin will be also installed within the main body of the valve.

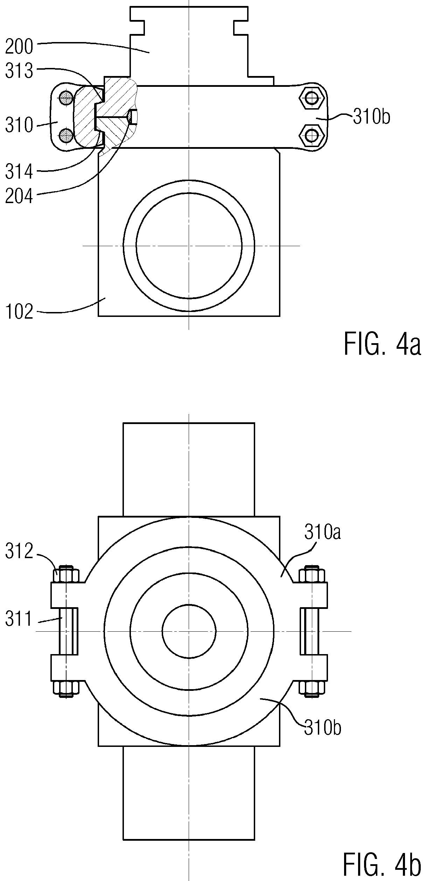

Although the present invention has been previously clarified by means of a detailed description of its embodiments shown in the attached drawings, it is to be specified that the present invention is not limited to the shown and described embodiments. Conversely, all those embodiments equivalent to those described and shown which will be apparent to the person skilled in the art belong to the present invention, which is limited only by the appended claims. For example, a wide range of choice is offered in relation to the materials which are preferred for implementing the constituent parts of the valve. In the same way, the number and the arrangement of the fixing means for fixing the cover to the main body of the valve (of the tie rods and of the corresponding nuts) as well as of the eyebolts provided for facilitating moving and transporting the valve can be chosen at will according to the needs and/or circumstances. Furthermore, in order to fix the cover to the body of the valve alternative solutions other than using threaded nuts and bolts or tie rods can be provided. Among the possible solutions, one can mention as a non-limiting example the so-called "clamp" solution shown in Figures 4a and 4b. This solution provides using half-rings 310a and 310b each one having a C-shaped cross-section (perpendicular to the extension). On the other hand, cover 200 and main body 102 each comprise a circumferential surface. In particular, cover 200 comprises a circumferential surface 313 tilted downwards towards the outside, whereas main body 102 comprises a circumferential surface 314 tilted upwards towards the outside. When cover 200 and main body 102 are positioned as in Figure 4a, that is to say, with respective surfaces 313 and 314 substantially super-imposed according to a top view, the two clamping half-rings 310a and 310b are caused to abut on surfaces 313 and 314, i.e. with the two opposite inner surfaces of the half-rings abutting on surface 313 and surface 314, respectively, so as to clamp cover 200 onto main body 210. In particular, the final clamping is achieved by acting upon nuts and respective bolts 312 and 311, i.e. by causing the two half-rings to get closer to each other so as to compress gaskets 204. The same holds for the choice of the type of sealing elements (as well as of the materials for implementing them) provided in points in which the fluid must be prevented from leaking, for example, in correspondence to the closing element as well as between the cover and the main body of the valve. The scope of protection of the present invention is thus defined by the claims.

## Claims

1. Valve, in particular check valve (100) adapted to regulate the flow of a fluid, said valve (100) comprising:
a main body (102) which defines an internal flow cavity adapted to allow said fluid to flow through its inside;
a closing element (101) of said cavity, which can be moved between a first closing position and a second opening position of said cavity;
a cover (200) adapted to be alternatively fixed to and removed from said main body (102) so as to alternatively close and open an aperture of said main body (102) through which said cavity is in communication with the outside of said valve (100);
wherein said closing element (101) is rotatably fixed to a portion (209) of said cover (200) by means of a fixing portion (203), so that by removing said cover (200) from said main body (102) said closing element (101) is simultaneously removed too, said cover (200) further including a receiving seat (201) wherein there is at least partially received an activation device of said closing element (101), said activation device comprising a rotating shaft (210) and a transmission element (214) disposed between said rotating shaft (210) and said fixing portion (203), **characterized in that** said transmission element (214) includes a substantially cylindrical empty body wherein there is received a first end portion of said rotating shaft (210), said transmission element (214) further including a helicoidal abutting seat (221) wherein there is received an abutting pin (215) which extends from said rotating shaft (210).

2. Valve (100) according to claim 1, wherein said portion (209) of said cover (200) extends from said cover towards the inside of said main body (102).

3. Valve according to one of claims 1 and 2, wherein said fixing portion includes a first end portion fixed to said closing element, along with a second end portion opposite to said first end portion and rotatably fixed to said portion (209).

4. Valve (100) according to claim 3, wherein said second end portion of said fixing portion (203) includes a receiving seat (218) wherein there is received a portion of a rotating pin (217) rigidly fixed to said portion (209) of said cover (200), said fixing portion (203) being rotatable with respect to said rotating pin (217).

5. Valve according to any preceding claim, wherein the rotation of said rotating shaft (210) in a first rotating direction results in said fixing portion (203) being rotated in a first rotating direction with respect to a rotating pin (217), whilst the rotation of said rotating shaft (210) in a second direction of rotation contrary to said first direction of rotation results in said fixing portion (203) being rotated in a second direction of rotation, contrary to said first direction of rotation with respect to said rotation pin (217).

6. Valve according to any preceding claim wherein said transmission element (214) is adapted to slide on said first end portion of said rotating shaft (210), said empty body being furthermore connected to said first end portion of said rotating shaft so that a rotation of said rotating shaft in said first direction of rotation results in said empty body being translated in a first direction of translation, and therefore in said fixing portion (203) being rotated in said first direction of rotation whilst said rotation of said rotating shaft (210) in said second direction of rotation results in said empty body being translated in a second direction of translation contrary to said first direction of translation, and therefore in said fixing portion being rotated in said second direction of rotation.

7. Valve according to claim 3 wherein said empty body includes an end portion opposite to said rotating shaft and fixed to said fixing portion (203) in a position intermediate between said first and second end portions of said fixing portion (203).

8. Valve according to claim 7, wherein said end portion of said empty body includes a fixing pin (220) which is received in a receiving seat (219) formed in said fixing portion (203).

9. Valve according to claim 8, wherein said receiving seat (219) is shaped like a slot.

10. Valve according to any of claims 1 to 11, wherein said cover (200) is fixed to said main body (102) by means of a plurality of fixing means (205, 206).

11. Valve according to claim 10 wherein said fixing means include a plurality of tie-rods (206) each including a first end portion which is received in a corresponding receiving seat formed in said main body (102), along with a corresponding plurality of nuts each of said nuts being in a abutment with the second end portion of a corresponding tie-rod (206) opposite to said first end portion.

12. Valve according to claim 11 wherein each of said tie-rods (206) includes an external thread which is engaged with the internal thread of the corresponding receiving seat and with which the internal thread of the corresponding nut (205) is engaged.

13. Valve according to claim 11 or 12, wherein each of said tie-rods (206) includes an intermediate portion received in a corresponding through hole formed in a flange portion of said cover (200).

14. Valve according to claim 1 further comprising an indicator (300) including a plate attached to a tower portion (208) of said cover (200), said indicator further comprising a hand rotatable with respect to said plate between a first end corresponding to a position of full opening of said valve (100) and a second end corresponding to a position of closing said valve (100).

15. Valve according to claim 14 further comprising a transmission mechanism (216) including a first gear wheel fixed to said rotating shaft (210) which causes a second gear wheel to rotate which is arranged substantially perpendicular to said first gear wheel, said second gear wheel connected to said hand of said indicator (300) by means of a connecting pin.

## Patentansprüche

1. Ventil, insbesondere Rückschlagventil (100), geeignet, um den Fluss eines Fluids zu regulieren, wobei das Ventil (100) umfasst:
einen Hauptkörper (102), der einen internen Flusshohlraum definiert, geeignet, um es dem Fluid zu erlauben, durch sein Inneres zu fließen;
ein Verschlusselement (101) des Hohlraums, das zwischen einer ersten Verschlussposition und einer zweiten Verschlussposition des Hohlraums bewegt werden kann;
eine Abdeckung (200), geeignet, um alternativ an dem Hauptkörper (102) befestigt und von diesem entfernt zu werden, um alternativ eine Öffnung des Hauptkörpers (102) zu schließen und zu öffnen, durch die der Hohlraum in Kommunikation mit dem Äußeren des Ventils (100) ist;
wobei das Verschlusselement (101) rotierbar an einem Teil (209) der Abdeckung (200) mittels eines Befestigungsteils (203) befestigt ist, sodass mittels Entfernens der Abdeckung (200) von dem Hauptkörper (102) das Verschlusselement (101) gleichzeitig auch entfernt wird,
wobei die Abdeckung (200) weiter einen Aufnahmesitz (201) einschließt, wobei darin mindestens teilweise eine Aktivierungseinrichtung des Verschlusselements (101) aufgenommen ist, wobei die Aktivierungseinrichtung eine rotierende Welle (210) umfasst und ein Transmissionselement (214), angeordnet zwischen der rotierenden Welle (210) und dem Befestigungsteil (203), **dadurch gekennzeichnet, dass** das Transmissionselement (214) einen im Wesentlichen zylindrischen leeren Körper einschließt, wobei darin ein erstes Endteil der rotierenden Welle (210) aufgenommen ist, wobei das Transmissionselement (214) weiter einen schraubenartigen Anlagesitz (221) einschließt, in dem ein Anlagestift (215) aufgenommen ist, der sich von der rotierenden Welle (210) erstreckt.

2. Ventil (100) nach Anspruch 1, wobei das Teil (209) der Abdeckung (200) sich von der Abdeckung in Richtung auf das Innere des Hauptkörpers (102) erstreckt.

3. Ventil nach einem der Ansprüche 1 oder 2, wobei das Befestigungsteil ein erstes Endteil, das an dem Verschlusselement befestigt ist, einschließt, zusammen mit einem zweiten Endteil, entgegengesetzt zu dem ersten Endteil, und rotierbar an dem Teil (209) fixiert.

4. Ventil (100) nach Anspruch 3, wobei das zweite Endteil des Befestigungsteils (203) einen Aufnahmesitz (218) einschließt, wobei darin ein Teil eines rotierenden Stifts (217) starr an dem Teil (209) der Abdeckung (200) aufgenommen ist, wobei das Befestigungsteil (203) rotierbar in Bezug auf den rotierenden Stift (217) ist.

5. Ventil nach einem der vorstehenden Ansprüche, wobei die Rotation der rotierenden Welle (210) in einer ersten Rotationsrichtung darin resultiert, dass das Befestigungsteil (203) in einer ersten Rotationsrichtung in Bezug auf einen rotierenden Stift (217) rotiert wird, während die Rotation der rotierenden Welle (210) in einer zweiten Rotationsrichtung entgegengesetzt der ersten Rotationsrichtung darin resultiert, dass das Befestigungsteil (203) in einer zweiten Rotationsrichtung rotiert wird, entgegengesetzt zu der ersten Rotationsrichtung in Bezug auf den Rotationsstift (217).

6. Ventil nach einem der vorstehenden Ansprüche, wobei das Transmissionselement (214) geeignet ist, um auf dem ersten Endteil der rotierenden Welle (210) zu gleiten, wobei der leere Körper weiter mit dem ersten Endteil der rotierenden Welle verbunden ist, sodass eine Rotation der rotierenden Welle in der ersten Rotationsrichtung darin resultiert, dass der leere Körper in eine erste Translationsrichtung translatiert wird, und daher darin, dass das Befestigungsteil (203) in die erste Rotationsrichtung rotiert wird, während die Rotation der rotierenden Welle (210) in der zweiten Rotationsrichtung darin resultiert, dass der leere Körper in eine zweite Translationsrichtung entgegengesetzt der ersten Translationsrichtung translatiert wird, und daher darin, dass der Befestigungsteil in die zweite Rotationsrichtung rotiert wird.

7. Ventil nach Anspruch 3, wobei der leere Körper ein Endteil entgegengesetzt der rotierenden Welle und befestigt an dem Befestigungsteil (203) in einer Position zwischenliegend zwischen den ersten und zweiten Endteilen des Befestigungsteils (203), einschließt.

8. Ventil nach Anspruch 7, wobei das Endteil des leeren Körpers einen Befestigungsstift (220) einschließt, der in einem Aufnahmesitz (219), gebildet in dem Befestigungsteil (203), aufgenommen ist.

9. Ventil nach Anspruch 8, wobei der Aufnahmesitz (219) wie ein Slot geformt ist.

10. Ventil nach einem der Ansprüche 1 bis 11, wobei die Abdeckung (200) an dem Hauptkörper (102) mittels einer Vielzahl von Befestigungsmitteln (205, 206) befestigt ist.

11. Ventil nach Anspruch 10, wobei die Befestigungsmittel eine Vielzahl von Verbindungsbolzen (206) einschließt, wobei jeder ein erstes Endteil einschließt, das in einem entsprechenden Aufnahmesitz aufgenommen ist, der in dem Hauptkörper (102) ausgebildet ist, zusammen mit einer entsprechenden Vielzahl von Muttern, wobei jede der Muttern in einer Anlage mit dem zweiten Endteil eines entsprechenden Verbindungsbolzens (206) entgegengesetzt dem ersten Endteil ist.

12. Ventil nach Anspruch 11, wobei jeder der Verbindungsbolzen (206) ein Außengewinde einschließt, das mit dem Innengewinde des entsprechenden Aufnahmesitzes in Eingriff steht und mit dem das Innengewinde der entsprechenden Mutter (205) in Eingriff steht.

13. Ventil nach Anspruch 11 oder 12, wobei jeder der Verbindungsbolzen (206) einen zwischenliegenden Teil einschließt, der in einem entsprechenden Durchgangsloch aufgenommen ist, das in einem Flanschteil der Abdeckung (200) ausgebildet ist.

14. Ventil nach Anspruch 1, weiter umfassend eine Anzeige (300) einschließend eine Platte, angebracht an einem Turmteil (208) der Abdeckung (200), wobei die Anzeige weiter einen Zeiger umfasst, der in Bezug auf die Platte zwischen einem ersten Ende, entsprechend einer Position der vollen Öffnung des Ventils (100), und einem zweiten Ende, entsprechend einer Position des Schließens des Ventils (100), rotierbar ist.

15. Ventil nach Anspruch 14, weiter umfassend einen Transmissionsmechanismus (216), einschließend erstes Getrieberad, befestigt an der rotierenden Welle (210), das ein zweites Getrieberad veranlasst, zu rotieren, das im Wesentlichen senkrecht zu dem ersten Getrieberad angeordnet ist, wobei das zweite Getrieberad mit dem Zeiger des Anzeigers (300) mittels eines Verbindungsstifts verbunden ist.

## Revendications

1. Vanne, en particulier clapet antiretour (100) apte à réguler l'écoulement d'un fluide, ladite vanne (100) comprenant :
un corps principal (102) définissant une cavité d'écoulement interne apte à permettre l'écoulement dudit fluide à travers l'intérieur de celle-ci ;
un élément de fermeture (101) de ladite cavité, pouvant être déplacé entre une première position de fermeture et une deuxième position d'ouverture de ladite cavité ;
un couvercle (200) apte à être en alternance fixé audit corps principal (102) et retiré de celui-ci de manière à fermer et ouvrir en alternance une ouverture dudit corps principal (102) à travers laquelle ladite cavité est en communication avec l'extérieur de ladite vanne (100) ;
dans laquelle ledit élément de fermeture (101) est fixé, de manière à pouvoir tourner, à une portion (209) dudit couvercle (200) au moyen d'une portion de fixation (203), de sorte que, en retirant ledit couvercle (200) dudit corps principal (102), ledit élément de fermeture (101) soit également retiré simultanément, ledit couvercle (200) comprenant en outre un siège de réception (201) qui reçoit au moins partiellement un dispositif d'activation dudit élément de fermeture (101), ledit dispositif d'activation comprenant un arbre de rotation (210) et un élément de transmission (214) disposé entre ledit arbre de rotation (210) et ladite portion de fixation (203),
**caractérisée en ce que** ledit élément de transmission (214) comprend un corps vide sensiblement cylindrique recevant une première portion d'extrémité dudit arbre de rotation (210), ledit élément de transmission (214) comprenant en outre un siège contigu hélicoïdal (221) recevant une tige contiguë (215) s'étendant depuis ledit arbre de rotation (210).

2. Vanne (100) selon la revendication 1, dans laquelle ladite portion (209) dudit couvercle (200) s'étend depuis ledit couvercle vers l'intérieur dudit corps principal (102).

3. Vanne selon l'une des revendications 1 et 2, dans laquelle ladite portion de fixation comprend une première portion d'extrémité fixée audit élément de fermeture, et une deuxième portion d'extrémité à l'opposé de ladite première portion d'extrémité et fixée, de manière à pouvoir tourner, à ladite portion (209).

4. Vanne (100) selon la revendication 3, dans laquelle ladite deuxième portion d'extrémité de ladite portion de fixation (203) comprend un siège de réception (218) recevant une portion d'une tige rotative (217) fixée, de manière rigide, à ladite portion (209) dudit couvercle (200), ladite portion de fixation (203) pouvant tourner par rapport à ladite tige rotative (217).

5. Vanne selon l'une quelconque des revendications précédentes, dans laquelle la rotation dudit arbre de rotation (210) dans un premier sens de rotation engendre la rotation de ladite portion de fixation (203) dans un premier sens de rotation par rapport à une tige rotative (217), alors que la rotation dudit arbre de rotation (210) dans un deuxième sens de rotation contraire audit premier sens de rotation engendre la rotation de ladite portion de fixation (203) dans un deuxième sens de rotation, contraire audit premier sens de rotation, par rapport à ladite tige rotative (217).

6. Vanne selon l'une quelconque des revendications précédentes, dans laquelle ledit élément de transmission (214) est apte à coulisser sur ladite première portion d'extrémité dudit arbre de rotation (210), ledit corps vide étant en outre raccordé à ladite première portion d'extrémité dudit arbre de rotation de sorte qu'une rotation dudit arbre de rotation dans ledit premier sens de rotation engendre une translation dudit corps vide dans un premier sens de translation, et par conséquent une rotation de ladite portion de fixation (203) dans ledit premier sens de rotation, alors que ladite rotation dudit arbre de rotation (210) dans ledit deuxième sens de rotation engendre une translation dudit corps vide dans un deuxième sens de translation contraire audit premier sens de translation, et par conséquent une rotation de ladite portion de fixation dans ledit deuxième sens de rotation.

7. Vanne selon la revendication 3, dans laquelle ledit corps vide comprend une portion d'extrémité à l'opposé dudit arbre de rotation et fixée à ladite portion de fixation (203) à une position intermédiaire entre ladite première portion d'extrémité et ladite deuxième portion d'extrémité de ladite portion de fixation (203).

8. Vanne selon la revendication 7, dans laquelle ladite portion d'extrémité dudit corps vide comprend une broche de fixation (220) qui est reçue dans un siège de réception (219) formé dans ladite portion de fixation (203).

9. Vanne selon la revendication 8, dans laquelle ledit siège de réception (219) est en forme de fente.

10. Vanne selon l'une quelconque des revendications 1 à 11, dans laquelle ledit couvercle (200) est fixé audit corps principal (102) au moyen d'une pluralité de moyens de fixation (205, 206).

11. Vanne selon la revendication 10, dans laquelle lesdits moyens de fixation comprennent une pluralité de tirants (206), chacun d'eux comprenant une première portion d'extrémité qui est reçue dans un siège de réception correspondant formé dans ledit corps principal (102), avec une pluralité correspondante d'écrous, chacun desdits écrous venant en butée contre ladite deuxième portion d'extrémité d'un tirant (206) correspondant à l'opposé de ladite première portion d'extrémité.

12. Vanne selon la revendication 11, dans laquelle chacun desdits tirants (206) comprend un filetage externe qui est mis en prise avec le filetage interne du siège de réception correspondant et avec lequel le filetage interne de l'écrou correspondant (205) est mis en prise.

13. Vanne selon la revendication 11 ou 12, dans laquelle chacun desdits tirants (206) comprend une portion intermédiaire reçue dans un trou traversant correspondant formé dans une portion de bride dudit couvercle (200).

14. Vanne selon la revendication 1, comprenant en outre un indicateur (300) comprenant une plaque attachée à une portion de tour (208) dudit couvercle (200), ledit indicateur comprenant en outre une aiguille rotative par rapport à ladite plaque entre une première extrémité correspondant à une position d'ouverture complète de ladite vanne (100) et une deuxième extrémité correspondant à une position de fermeture de ladite vanne (100).

15. Vanne selon la revendication 14, comprenant en outre un mécanisme de transmission (216) comprenant une première roue dentée fixée audit arbre de rotation (210) qui provoque la rotation d'une deuxième roue dentée agencée sensiblement perpendiculairement à ladite première roue dentée, ladite deuxième roue dentée étant raccordée à ladite aiguille dudit indicateur (300) au moyen d'une tige de raccordement.
